(19) Europäisches Patentamt
European Patent Office
Office européen des brevets

(11) **EP 3 340 811 B1**

(12) **EUROPEAN PATENT SPECIFICATION**

(45) Date of publication and mention
of the grant of the patent:
**29.04.2020   Bulletin 2020/18**

(51) Int Cl.:
*A23L 33/00* (2016.01)          *A23L 33/115* (2016.01)

(21) Application number: **16757652.9**

(22) Date of filing: **26.08.2016**

(86) International application number:
**PCT/EP2016/070219**

(87) International publication number:
**WO 2017/032886 (02.03.2017 Gazette 2017/09)**

(54) **NUTRITIONAL SYSTEMS COMPRISING GENDER SPECIFIC SYNTHETIC NUTRITIONAL COMPOSITIONS**

NÄHRSTOFFSYSTEME UMFASSEND GESCHLECHTSSPEZIFISCHE SYNTHETISCHE NÄHRSTOFFZUSAMMENSETZUNGEN

SYSTÈMES NUTRITIONNELS COMPRENANT DES COMPOSITIONS NUTRITIONNELLES SYNTHÉTIQUES SPÉCIFIQUES AU GENRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2015   EP 15182766**

(43) Date of publication of application:
**04.07.2018   Bulletin 2018/27**

(73) Proprietor: **Société des Produits Nestlé S.A.**
**1800 Vevey (CH)**

(72) Inventors:
• **THAKKAR, Sagar**
**1817 Brent (CH)**
• **GIUFFRIDA, Francesca**
**1083 Mezieres (CH)**
• **DE CASTRO, Carlos Antonio**
**1203 Geneva (CH)**
• **DESTAILLATS, Frederic**
**1077 Servion (CH)**

(74) Representative: **Gagliardi, Tatiana et al**
**Société des Produits Nestlé S.A.**
**Avenue Nestlé 55**
**1800 Vevey (CH)**

(56) References cited:
WO-A1-2011/135564        WO-A1-2013/036102
WO-A1-2015/086170        WO-A2-2013/153071
US-A1- 2004 265 462

• **HURGOIU V ET AL: "LA DYNAMIQUE DE LA COMPOSITION DES LIPIDES DU LAIT HUMAIN AU COURS DE LA LACTATION - [DYNAMIC OF LIPID CONTENT IN HUMAN MILK DURING LACTATION]", PEDIATRIE, PEDIATRIE, LYON, FR, vol. 40, no. 3, 1 January 1985 (1985-01-01), pages 201-205, XP008178886, ISSN: 0031-4021**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field:**

The invention relates to nutritional systems comprising gender specific synthetic nutritional compositions, to provide an optimised amount of cholesterol and/or one or more health benefit to an infant of four month of age or older.

**Background of the invention**

Even though breastfeeding is optimal for infants, the existence of certain conditions may mean that it is contraindicated (AAP, 2012; Lawrence, 2013). In such cases, where the sole source of nutrition is not available to infants, alternative strategies to feed them have to be devised.

Feeding infants with synthetic nutritional compositions e.g. Infant formula is one such strategy.

The compositions of the aforementioned synthetic nutritional compositions e.g. infant formulas, aim to replicate those of human milk (hereinafter HM). However, replicating HM is not a simple task. HM not only contains numerous components, its composition is extremely dynamic and these dynamic changes remain largely unexplored and uncharacterized. For example, WO 2013/153071 A2 discloses a synthetic infant formula for infants of 12 month of age or younger, comprising 50-100 μg cholesterol/mL, adapted to the cholesterol level of human milk.

The inventors have now surprisingly found that the concentration of cholesterol in HM may differ depending on the stage of lactation and the gender of a mother's infant. Because such age and gender differences in the cholesterol concentration of HM have never previously been identified, these differences are not reflected in the compositions of synthetic nutritional compositions available for infants today. Given that HM is considered the gold standard with respect to infant nutrition, there remains a need for synthetic nutritional compositions tailored for infants of specific ages and genders which better reflect these identified differences.

**Summary of the invention**

The invention is set out in the claims. The inventors have developed gender specific synthetic nutritional compositions for infants comprising cholesterol in concentrations that reflect the concentration of cholesterol found in HM produced for an infant of the same age and gender.

Said gender specific synthetic nutritional compositions may for example be an infant formula or a composition for an infant, that is intended to be added to or diluted with human milk.

The gender specific synthetic nutritional compositions of the invention can be prepared from a gender neutral synthetic nutritional composition by measuring out an appropriate amount of said gender neutral synthetic nutritional composition and mixing it with an additive and/or diluent e.g. cholesterol and/or water.

The gender specific synthetic nutritional compositions of the invention are included in a nutritional system. Said nutritional system comprises a gender specific synthetic nutritional composition for a female infant and a gender specific composition for a male infant of the same age, wherein the gender specific synthetic nutritional composition for a male infant comprises more cholesterol than a gender specific synthetic nutritional composition for a female infant of the same age.

The cholesterol concentration of a gender specific synthetic nutritional composition of the invention reflects the cholesterol concentration found in HM produced for an infant of the same gender and age. Because HM is considered optimal with respect to infant nutrition, a gender specific synthetic nutritional composition of the invention, and therefore a nutritional system comprising same, may provide an optimized amount of cholesterol to an infant, and may be used to ensure optimum cholesterol levels in an infant both short term and long term.

Said gender specific synthetic nutritional compositions of the invention, and the nutritional systems comprising them may even provide long term protection against hypercholesterolemia and a condition associated therewith e.g. hyperlipidemia related cardio-cerebro-vascular diseases including coronary heart disease, angina, myocardial infarction, atherosclerosis, coronary artery disease, stroke, claudication, peripheral vascular disease, non-alcohol fatty liver disease, metabolic diseases such as type II diabetes and combinations thereof.

**Drawings**

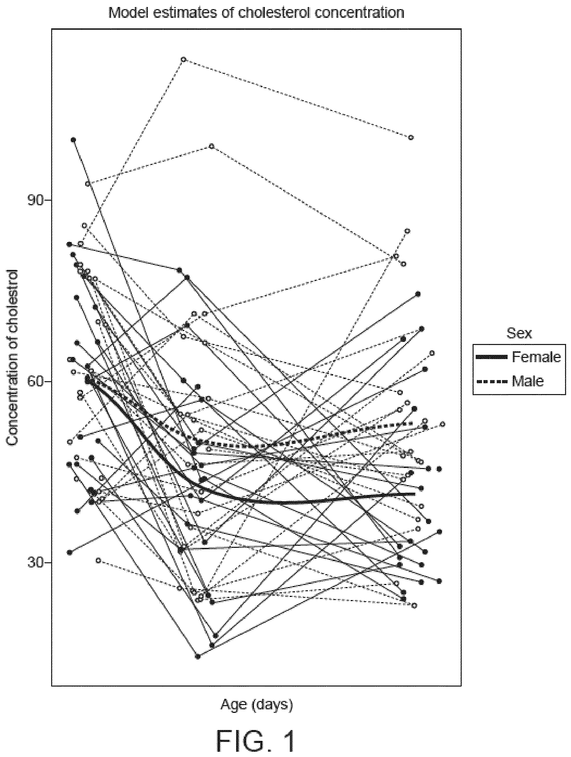

FIG.1 is a graphical representation of the actual and model estimates of cholesterol concentration in HM by gender at 30 days(1 month), 60 days (2 months), and 120 days (4 months) postpartum.

**Detailed Description**

The inventors performed a longitudinal study evaluating the nutrient composition of HM collected from mothers at various stages of lactation (30 days (1 month), 60 days (2months), and 120 days (4 months) postpartum). Surprisingly the results of this study indicated that the concentration of cholesterol found in HM can differ depending on the stage of lactation and/or the gender of a mother's infant. In particular this study indicated that the concentration of cholesterol may be higher in HM produced by mothers to boys than in HM produced by mothers to girls at the same stage of lactation. Details of the study, analysis techniques and results are given in example 1.

Based on the findings of the study, the inventors have designed gender specific synthetic nutritional compositions that comprise cholesterol in a concentration that reflects the cholesterol concentration found in HM produced for an infant of the same gender at the corresponding stage of lactation.

The term "gender specific synthetic nutritional composition" as used herein refers to any synthetic nutritional composition, intended to be consumed by an infant that is specifically adapted to the nutritional needs of either a female or male enfant. Non limiting examples of gender specific synthetic nutritional compositions for infants from birth to 4 months include; infant formulae, and a composition for infants that is intended to be added or diluted with HM e.g. HM fortifier. Non limiting examples of gender specific synthetic nutritional compositions for infants from 4 months to 12 months include infant formulae, a composition for infants that is intended to be added or diluted with HM e.g. HM fortifier, or food stuffs intended for consumption by infants either alone or in combination with HM e.g. complementary foods.

The term "infant" as used herein refers to a human infant of 12 months of age or less.

In an aspect of the present invention there is provided a gender specific synthetic nutritional composition tailored for an infant comprising cholesterol in a concentration reflecting the concentration found in HM produced for an infant of the same gender at the corresponding lactation stage i.e. age.

Described is a male gender specific synthetic nutritional composition for an infant of up to 2 months of age comprising cholesterol in a concentration selected from the group consisting of: 30 to 93, 42 to 79, 60 to 61, and 60.72 $\mu$g/ml.

Further described is a female gender specific synthetic nutritional composition for an infant of up to 2 months of age comprising cholesterol in a concentration selected from the group consisting of: 32 to 101, 43 to 95, 61 to 78, and 60.25 $\mu$g/ml.

Non limiting examples of ages up to 2 months of age include; up to 2 weeks, up to 1 month, 1 month, and 1 month up to 2 months of age.

Described is a male gender specific synthetic nutritional composition for an infant of 2 months up to 4 months of age comprising cholesterol in a concentration selected from the group consisting of: 24 to 114, 26 to 20 98, 50 to 74 and 50.45 $\mu$g/ml.

Also described is a female gender specific synthetic nutritional composition for an infant of 2 months up to 4 months of age comprising cholesterol in a concentration selected from the group consisting of: 14 to 79, 25 to 62, 42 to 44, and 4.87 $\mu$g/ml.

Non limiting examples of ages 2 months up to 4 months include; 2 months, 2 months up to 3 months, 3 months, 3 months up to 4 months.

The nutritional system of the invention comprises a male gender specific synthetic nutritional composition for an infant of 4 months of age and comprising cholesterol in a concentration selected from the group consisting of: 23 to 101, 33.1 to 93, 33 to 73, 52 to 54, and 53.03 $\mu$g/ml and a female gender specific synthetic nutritional composition for an infant of 4 months of age and older comprising cholesterol in a concentration selected from the group consisting of: 24 to 75, 26 to 73, 42 to 58, 40 to 42 and 41.96 $\mu$g/ml.

Non limiting examples of an age 4 months of age and older include; 4, 5, 6, 7, 8, 9, 10, 11, and 12 months of age, 4 to 6 months of age, 4 to 12 months of age, 6 to 12 months of age, 6 to 9 months of age, and 9 to 12 months of age.

The cholesterol concentration of the gender specific synthetic nutritional compositions defined herein is expressed in $\mu$g/ml. This may refer to the cholesterol concentration of a reconstituted gender specific synthetic nutritional composition.

The term cholesterol as used herein refers to cholesterol and cholesteryl esters

The cholesterol concentration of a composition can be measured by methods well known in the art. In particular the cholesterol concentration can be measured using a fluorometric method, in particular by employing an Amplex® Red Cholesterol Assay Kit which provides a simple fluorometric method for the sensitive quantitation of cholesterol using a fluorescence microplate reader or fluorometer. The assay is based on an enzyme-coupled reaction that detects both free cholesterol and cholesteryl esters. Cholesteryl esters are hydrolyzed by cholesterol esterase into cholesterol, which is then oxidized by cholesterol oxidase to yield $H_2O_2$ and the corresponding ketone product. The $H_2O_2$ is then detected using 10-acetyl-3,7-dihydroxyphenoxazine (Amplex® Red reagent), a highly sensitive and stable probe for $H_2O_2$.

Any source of cholesterol suitable for administration to an infant to whom the gender specific synthetic nutritional composition is directed may be comprised within in the gender specific synthetic nutritional compositions of the invention.

The cholesterol and cholesteryl esters comprised in the gender specific synthetic nutritional compositions of the invention may be synthetic or natural. In particular they may stem from natural sources, more particularly animal sources such as bovine milk, goat milk, camel milk, sheep milk, and/or eggs.

The gender specific synthetic nutritional compositions of the invention can also comprise any other ingredients or excipients known to be employed in the type of gender specific synthetic nutritional composition in question e.g. infant formula.

Non limiting examples of such ingredients include: proteins, amino acids, carbohydrates, oligosaccharides, lipids, prebiotics or probiotics, essential fatty acids, nucleotides, nucleosides, vitamins, minerals and other micronutrients.

Non limiting examples of proteins include: casein, alpha-lactalbumin, whey, soy protein, rice protein, corn protein, oat protein, barley protein, wheat protein, rye protein, pea protein, egg protein, sunflower seed protein, potato protein, fish protein, meat protein, lactoferrin, serum albumin, immunoglobins, and combinations thereof.

Non limiting examples of amino acids include leucine, threonine, tyrosine, Isoleucine, arginine, alanine, histidine, isoleucine, proline, valine, cysteine, glutamine, glutamic acid, glycine, serine, arginine, lysine, methionine, phenylalanine, tryptophane, asparagine, aspartic acid, and combinations thereof.

Non limiting examples of carbohydrates include lactose, saccharose, maltodexirin, starch, and combinations thereof.

Non limiting examples of lipids include: palm olein, high oleic sunflower oil, high oleic safflower oil, canola oil, fish oil, coconut oil, bovine milk fat, and combinations thereof.

Non limiting examples of essential fatty acids include: linoleic acid (LA), $\alpha$-linolenic acid (ALA) and polyunsaturated fatty acids (PUFAs). The gender specific synthetic nutritional compositions of the invention may further contain gangliosides monosialoganglioside-3 (GM3) and disialogangliosides 3 (GD3), phospholipids such as sphingomyelin, phospholipids phosphatidylcholine, phosphatidylethanolamine, phosphatidylinositol, phosphatidylserine, and combinations thereof.

None limiting examples of prebiotics include: oligosaccharides optionally containing fructose, galactose, mannose; dietary fibers, in particular soluble fibers, soy fibers; inulin; and combinations thereof. Preferred prebiotics are fructo-oligosaccharides (FOS), galacto-oligosaccharides (GOS), isomalto-oligosaccharides (IMO), xylo-oligosaccharides (XOS), arabino-xylo oligosaccharides (AXOS), mannan-oligosaccharides (MOS), oligosaccharides of soy, glycosylsucrose (GS), lactosucrose (LS), lactulose (LA), palatinose-oligosaccharides (PAO), maltooligosaccharides, gums and/or hydrolysates thereof, pectins and/or hydrolysates thereof, and combinations of the foregoing.

Further examples of oligosaccharide are described in Wrodnigg, T. M.; Stutz, A.E. (1999) Angew. Chem. Int. Ed. 38:827-828 and in WO 2012/069416 which is incorporated herein by reference.

Non limiting examples of probiotics include: *Bifidobacterium, Lactobacillus, Lactococcus, Enterococcus, Streptococcus, Kluyveromyces, Saccharoymces, Candida,* in particular selected from the group consisting of *Bifidobacterium longum, Bifidobacterium lactis, Bifidobacterium animalis, Bifidobacterium breve, Bifidobacterium infantis, Bifidobacterium adolescentis, Lactobacillus acidophilus, Lactobacillus casei, Lactobacillus paracasei, Lactobacillus salivarius, Lactobacillus lactis, Lactobacillus rhamnosus, Lactobacillus johnsonii, Lactobacillus plantarum, Lactobacillus salivarius, Lactococcus lactis, Enterococcus faecium, Saccharomyces cerevisiae, Saccharomyces boulardii* or mixtures thereof, preferably selected from the group consisting of *Bifidobacterium longum* NCC3001 (ATCC BAA-999), *Bifidobacterium longum* NCC2705 (CNCM I-2618), *Bifidobacterium longum* NCC490 (CNCM I-2170), *Bifidobacterium lactis* NCC2818 (CNCM 1-3446), *Bifidobacterium breve* strain A, *Lactobacillus paracasei* NCC2461 (CNCM I-2116), *Lactobacillus johnsonii* NCC533 (CNCM I-1225), *Lactobacillus rhamnosus GG* (ATCC53103), *Lactobacillus rhamnosus* NCC4007 (CGMCC 1.3724), *Enterococcus faecium SF 68* (NCC2768; NCIMB10415), and combinations thereof.

Non limiting examples of Nucleotides include: cytidine monophosphate (CMP), uridine monophosphate (UMP), adenosine monophosphate (AMP), guanosine monophosphate (GMP), and combinations thereof.

Non limiting examples of vitamins and minerals include: vitamin A, vitamin B1, vitamin B2, vitamin B6, vitamin Bi2, vitamin E. vitamin K. vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, L-carnitine, and combinations thereof. Minerals are usually added in salt form.

Other suitable and desirable ingredients of synthetic nutritional compositions, that may be employed in the gender specific synthetic nutritional compositions of the invention are described in guidelines issued by the Codex Alimentarius with respect to the type of synthetic nutritional composition in question e.g. Infant formula, HM fortifier, follow on formula, or food stuffs intended for consumption by infants e.g. complementary foods.

The gender specific synthetic nutritional compositions of the invention may be prepared by methods well known in the art for preparing the type of gender specific synthetic nutritional composition in question e.g. infant formulae, follow on formulae, a composition for infants that is intended to be added or diluted with HM e.g. HM fortifier, or food stuffs intended for consumption by infants either alone or in combination with HM e.g. complementary foods.

An exemplary method for preparing a gender specific powdered infant formula is as follows. A protein source, carbohydrate source, and fat source may be blended together in appropriate proportions. Cholesterol may be added or may be inherently comprised within a protein, carbohydrate and/or fat source. Emulsifiers maybe included in the blend. Vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 1 10°C for about 5 seconds to about 5 minutes. This may be carried out by steam injection or by heat exchanger; for example a plate heat exchanger.

The liquid mixture may then be cooled to about 60°C to about 85°C; for example by flash cooling. The liquid mixture may then be homogenised; for example in two stages at about 7 MPa to about 40 MPa in the first stage and about 2 MPa to about 14 MPa in the second stage. The homogenised mixture may then be further cooled to add any heat sensitive components such as vitamins and minerals. The pH and solids content of the homogenised mixture is conveniently standardised at this point.

The homogenised mixture can be transferred to a suitable drying apparatus such as a spray drier or freeze drier and converted to powder. The powder should have a moisture content of less than about 3% by weight.

If it is desired probiotic(s) can be added, they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the gender specific powdered infant formula by dry mixing.

The gender specific synthetic nutritional compositions of the invention may also be prepared from a gender neutral synthetic nutritional composition in a method comprising; measuring out an appropriate amount of said gender neutral synthetic nutritional composition and mixing it with an additive and/or a diluent e.g. cholesterol and/or water so as to arrive at a gender specific synthetic nutritional composition in accordance with the invention.

The additive may be a gender specific additive comprising cholesterol in a particular concentration so that when mixed with the gender neutral synthetic nutritional composition, and optionally a diluent, the resulting mixture is a gender specific synthetic nutritional composition in accordance with the invention.

The gender neutral synthetic nutritional composition can be prepared by methods well known in the art for the type of composition in question e.g. as laid out above for infant formula.

The term "gender neutral" as used herein is synonymous with unisex.

One or more of the gender specific synthetic nutritional compositions of the invention can be included in a nutritional system.

The term "nutritional system" as used herein refers to a collection of more than one synthetic nutritional composition advertised or sold as part of the same product range e.g. a collection of infant formulas sold under the same brand and adapted/tailored to the nutritional needs of infants of differing ages and/or genders and/or delivered by different methods e.g. C-section. The synthetic nutritional compositions making up the nutritional system may be packaged individually e.g. in capsules or boxes. Said packages can be sold individually, grouped together e.g. wrapped by plastic film or combined in a box, or in a combination of these two ways. The nutritional system may also comprise synthetic nutritional compositions for children older than 12months.

In a further aspect of the present invention there is provided a nutritional system comprising a gender specific synthetic nutritional composition of the invention.

In an embodiment the nutritional system comprises a gender specific synthetic nutritional composition for a male infant and a gender specific synthetic nutritional composition for a female infant wherein said male and female gender specific synthetic nutritional compositions are for infants of the same age and wherein the concentration of cholesterol in said gender specific synthetic nutritional composition for a male infant is higher than in said gender specific synthetic nutritional composition for a female infant.

The concentration of cholesterol in said male gender synthetic nutritional compositions may be higher by any amount.

Further described is a nutritional system comprising a gender specific synthetic nutritional composition for a male infant of up to 2 months of age, and a gender specific synthetic nutritional composition for a female infant of up to 2 months of age wherein, the concentration of cholesterol in said male gender specific synthetic nutritional composition is higher than the cholesterol concentration of said female gender specific synthetic nutritional composition.

Said male gender specific synthetic nutritional composition comprises 0.26 to 60.85, 0.47 to 32.6, or 0.26 to 0.47, or 0.267 $\mu$g/ml more cholesterol than the female gender specific synthetic nutritional composition.

Also described is a nutritional system comprising a gender specific synthetic nutritional composition for a male infant of 2 months up to 4 months of age, and a gender specific synthetic nutritional composition for a female infant of 2 months up to 4 months of age wherein, the concentration of cholesterol in said male gender specific synthetic nutritional composition is higher than the cholesterol concentration of said female gender specific synthetic nutritional composition, wherein said male gender specific synthetic nutritional composition comprises 6.5 to 100, 35 to 70, 6.5 to 11.5, 7 to 11.5,

or 7.24 μg/ml more cholesterol than the female gender specific synthetic nutritional composition.

The nutritional system of the invention comprises a gender specific synthetic nutritional composition for a male infant of 4 months of age or older, and a gender specific synthetic nutritional composition for a female infant of 4 months of age or older wherein, the concentration of cholesterol in said male gender specific synthetic nutritional composition is higher than the cholesterol concentration of said female gender specific synthetic nutritional composition, wherein said male gender specific synthetic nutritional composition comprises 11 to 77, 26 to 76, 11 to 29, or 11 to 12 or 11.14 to 11.96 μg/ml more cholesterol than the female gender specific synthetic nutritional composition.

Statistical analysis of the results of the longitudinal study described herein indicated that gender differences in the cholesterol concentration of HM at 4 months (120 days) postpartum may be significant. Further, the statistical model also predicted that a significant difference may occur at 3 months (90 days) postpartum.

Accordingly, it may be that the nutritional systems of the invention only comprise a gender specific synthetic nutritional composition of the invention for an infant of 3 months of age and older e.g. 3, 4, 5, 6, 7, 8, 9, 10, 11, 12 months of age or any range therein, more particularly for an infant of 4 months of age or older.

In another embodiment the nutritional system further comprises gender neutral synthetic nutritional compositions for infants up to 3 months of age i.e. up to 2 months or 3 months of age and infants of 2 months up to 3 months of age.

In another embodiment the nutritional system further comprises gender specific synthetic nutritional compositions for infants of 3 months of age and older wherein, the cholesterol concentration does not differ by gender for infants of the same age.

The nutritional system may further comprise nutritional compositions for children older than 12months.

Gender specific synthetic nutritional compositions according to the invention are particularly suitable for use in a method of preparing single servings of infant formula using capsules, each capsule of which contains a unit dose of a synthetic nutritional composition e.g. a gender specific synthetic nutritional composition in a concentrated form, and which is equipped with opening means contained within the capsule to permit draining of the reconstituted synthetic nutritional composition directly from the capsule into a receiving vessel such as a baby bottle. Such a method is described in WO2006/077259.

The different synthetic nutritional compositions, including synthetic nutritional compositions tailored for an infant of a specific age may be packed into individual capsules and presented to the consumer in multipacks containing a sufficient number of capsules to meet the requirements of an infant of a particular age or age range, for one week for example. Suitable capsule constructions are disclosed in WO2003/059778.

The different synthetic nutritional compositions, including gender specific and gender neutral synthetic nutritional compositions, which may be comprised within a nutrition system, may be packed into individual capsules and presented to the consumer in multipacks containing a sufficient number of capsules to meet the requirements of an infant of a particular age or range for one week for example. Suitable capsule constructions are disclosed in WO2003/059778.

The capsules can contain the synthetic nutritional compositions, (gender specific and gender neutral) in the form of powders or concentrated liquids in both cases for reconstitution by an appropriate amount of water. Both the composition and the quantity of infant formula in the capsules may vary according to the gender and/or age of the infant. If necessary, different sizes of capsules may be provided for the preparation of infant formulas for infants of different genders and/or ages.

Because HM is the gold standard when it comes to infant nutrition, and because the cholesterol concentration of the gender specific synthetic nutritional compositions of the invention better reflect the cholesterol concentration found in HM at the corresponding lactation stage for mothers of infants of the corresponding gender, they, and the nutritional systems comprising them, may be used to provide an optimum amount of cholesterol to an infant and to ensure optimum cholesterol levels and to prevent conditions associated with non-optimal cholesterol levels e.g. hypercholesterolemia, and conditions associated therewith, and non-optimal cognitive development e.g. non optimal verbal fluency, attention/concentration, abstract reasoning.

Since it has been observed that adults who were exclusively breastfed have lower blood cholesterol concentrations than those who were not (see for example; AM J ClinNutr-2008-Owen-305-14 and Pediatrics-2005-Demmers-1594-601), the gender specific synthetic nutritional compositions of the invention may not only ensure optimum cholesterol levels in the short term but may also do so in the long term.

Long term effects may only be evident in months or years e.g. 6 months, 9 months, 12 months, 5 years, 10 years, or 20 years.

Described is a gender specific synthetic nutritional composition for use to prevent hypercholesterolemia and a condition associated therewith, and/or non-optimal cognitive development.

Non limiting examples of conditions associated with hypercholesterolemia include: hyperlipidemia related cardio-cerebro-vascular diseases including coronary heart disease, angina, myocardial infarction, atherosclerosis, coronary artery disease, stroke, claudication, peripheral vascular disease, non-alcohol fatty liver disease, metabolic diseases such as type II diabetes and combinations thereof.

The gender specific synthetic nutritional compositions of the invention may provide an optimum amount of cholesterol to an infant, in particular to an infant up to 2 months of age, 2 months up to 4 months of age, 3 months of age or older, or 4months of age or older.

The nutritional system may for example provide an optimum amount of cholesterol to an infant, in particular for an infant up to 12, 11, 10, 9, 8, 7, 6, 5, 4, 3, 2, 1 months of age and/or up to 2 weeks of age.

Further described is a method for providing an optimum amount of cholesterol to an infant comprising:

a) Optionally preparing a gender specific synthetic nutritional composition of the invention from a gender-neutral synthetic nutritional composition;
b) Feeding a gender specific synthetic nutritional composition according to the invention to an infant, in particular an infant of the corresponding gender and age, more particularly an infant of up to 2 months of age, 2 months up to 4 months of age, 3 months of age or older, or 4 months of age and older.

As stated herein. The gender specific synthetic nutritional compositions may be prepared from gender neutral synthetic nutritional compositions. Accordingly, there is provided a kit for providing an optimized amount of cholesterol to an infant, in particular an infant up to 2 months of age, 2 months to 4 months of age, 3 months of age or older, or 4 months of age or older, the kit comprising:

a) A gender neutral synthetic nutritional composition
b) A label indicating dosage requirements for an infant so as to arrive at a gender specific nutritional composition.

The dosage requirements may be with respect to the quantity of the gender neutral synthetic nutritional employed and/or consumption frequency e.g. 4 times per day.

There now follows a series of non-limiting examples that serve to illustrate the invention.

## Examples

### Example 1:

Longitudinal clinical trial:

The present inventors designed a longitudinal clinical trial with 50 lactating mothers with milk sampling at 30 (visit 1), 60 (visit 2) and 120 (visit 3) days post-partum. The milk samples were quantitatively analyzed for cholesterol.

Human milk collection: The protocol and collection of human milk was reviewed and approved by the local ethical committee of Singapore. The study took place at National University of Singapore. Volunteer mothers of term infants, who were apparently healthy and non-smokers (n = 50; $31.1 \pm 3.1$-year old) provided breast milk samples (approximately 30 mL). Samples were collected after full expression from one breast using a milk pump, while the baby was fed on the other breast. All efforts were made to collect complete feed that included fore-milk, mid-milk and hind-milk as a representation of one feed, to avoid within feed variation of lipid content.

Approximately 30 mL aliquot was separated in a conical polypropylene tube for this study and the rest was fed to the infant. Samples collected for research were stored at -80°C until analyses. Data collection points were 30 days (1month), 60 days (2months) and 120 days (4 months) postpartum.

**Measurement of the cholesterol concentrations in samples:** The cholesterol concentration of each sample was measured using an Amplex® Red Cholesterol Assay Kit which was employed according to the manufacturer's instructions.

**Preparation of 20mM Amplex Red reagent stock solution**

The content of the vial of the Amplex Red reagent (1mg, component A) was dissolved in 0.2ml of dimethyl sulfoxide (hereinafter DSMO) (component B). This stock solution was stored at - 20°C and protected from light.

**Preparation of 1 X Reaction Buffer Working Solution**

2.5ml of 5X Reaction buffer stock solution (component E) was added to 10ml of $dH_2O$.

**Preparation of 200U/ml horseradich peroxidase (hereinafter HRP) stock solution**

The contents of the HRP vial (component C) was dissolved in 1ml of 1 X reaction buffer. The solution was freshly prepared.

**Preparation of 20mM H$_2$O$_2$ working solution**

23µl 3% H$_2$O$_2$ stock solution (component D) was diluted into the appropriate 977 µl of dH$_2$O.

**Preparation of 200U/ml cholesterol oxidase stock solution**

The entire vial of cholesterol oxidase (component F) was dissolved in 0.25ml of 1 X reaction buffer. The solution was freshly prepared.

**Preparation of 200U/ml cholesterol esterase stock solution**

The entire vial of cholesterol esterase (component G) was dissolved in 0.25ml of 1 X reaction buffer. The solution was freshly prepared.

**Preparation of 2mM resorufin stock solution**

1ml of dH$_2$O was added directly to the vial of resorufin (component G). This stock solution was stored at -20°C and protected from light.

**Preparation of HM samples**

2µl of each HM sample was diluted with 300µl of reaction buffer (1:150 HM to reaction buffer)

**Experimental Protocol:**

A cholesterol standard curve was prepared from 0.2M working solution (for 400µl dilute 15.5ml of 5.17mM stock solution in 385.51µl 1 X reaction buffer) according to the table below:

Table I

| Tube | 200 µM chol Standard | 1 X Reaction Buffer | Final concentration (µM cholesterol) |
|------|----------------------|---------------------|--------------------------------------|
| 1 | 0 | 1000 | 0 |
| 2 | 5 | 495 | 2 |
| 3 | 10 | 490 | 4 |
| 4 | 15 | 485 | 6 |
| 5 | 20 | 480 | 8 |
| 6 | 30 | 470 | 12 |
| 7 | 40 | 460 | 16 |
| 8 | 50 | 450 | 20 |

The negative control is the first point of the standard curve (reaction buffer without cholesterol). 50 µl of each point of the standard curve is pipetted into a microplate in duplicate.
50 µl of the prepared HM samples (HM diluted with reaction buffer) was pipetted in duplicate or triplicate into separate wells of a 96 well plate.
For each plate. Reaction mix was prepared by adding:

90µl of amplex Red reagent stock solution

60 µl of HRP stock solution

60 µl of cholesterol oxidase stock solution

6 µl of cholesterol esterase stock solution

to 5.784ml of 1 X reaction buffer.

50 μl of reaction mix was added to the wells containing controls and samples.

The plate was incubated for 30mins (or longer if necessary) at 37°C and the plate was protected from light.

Florescence was measured in a plate reader using excitation in the range of 560nm and emission was detected ar 590nm.

For each prepared HM sample, the florescence was corrected for background by subtracting the values derived from the no-cholesterol control.

Florescence was always measured after the same incubation time.

The results of the analysis of the HM, with respect to cholesterol concentration are shown in table I.

Table II

| | Cholesterol Concentration μg/mL | | | | | | | |
| | Female | | | | Male | | | |
| Stage | Min | Mean | Max | SD | Min | Mean | Max | SD |
|---|---|---|---|---|---|---|---|---|
| 30days | 32 | 60.25 | 100.19 | 17.14 | 30 | 60.72 | 92.85 | 17.80 |
| 60 days | 14 | 43.87 | 78.51 | 18.03 | 24 | 50.45 | 113.58 | 23.69 |
| 120 days | 24 | 41.96 | 74.58 | 15.38 | 23 | 53.03 | 100.58 | 19.92 |

Statistical analysis: the results of the compositional analysis were then subject to a statistical analysis employing the following statistical model:

$$\text{Cholesterol} = B_0 + B_1\text{age} + B_2\text{age}^2 + B_3\text{sex} + B_4\text{age*sex} + B_5\text{age}^2\text{*sex} + \varepsilon$$

Age is represented in both linear and quadratic terms and is measured in days. $\varepsilon$ refers to the random effect of the model which controls for within subject variability.

The different suffixes ($B_0$, $B_1$, $B_2$...) represent the different estimated slopes attached to the corresponding variable (age, linear and quadratic, sex and/or their interaction).

Table II shows the estimates for timeframe differences along with the corresponding Pvalues.

The results of the Statistical analysis (statistical inference) are show in in table II.

Table III

| Timeframe | Variable | Contrast | SE | Pvalue |
|---|---|---|---|---|
| 30 days | Cholesterol | 0.266271 | 5.46380 | 0.9611315 |
| 60 days | Cholesterol | 7.242507 | 5.35767 | 0.1764385 |
| 90 days | Cholesterol | 11.139561 | 5.8961 | 0.0588510 |
| 120 days | Cholesterol | 11.957434 | 5.2680 | 0.0231087 |

Contrast refers to the estimated difference between male and female cholesterol levels. The estimates show that at 120 days, there is a statistically significant difference of 11.95 (unit).

A P-value inferior to 0.1 for a particular timeframe suggests that there is a statistically significant difference in the cholesterol content of HM produced at the specific timeframes indicated.

Estimates referring to the time point of 90 days are predictions coming from the model. This is following the fact that a statistically significant effect was found at 120 days and therefore it would've been interesting to see if this effect is already present between 60 and 120 days.

## Example 2

Examples of gender specific synthetic nutritional compositions (infant formulas) tailored to infants of 4 months of age or older are given in table III

Table IV

| Ingredients | 4 months of age and older | |
| --- | --- | --- |
| | M | F |
| | Per Liter | |
| Energy (kcal) | 630 | 630 |
| Protein (g) | 11.3 | 11.3 |
| Fat (g) | 31.446 | 31.458 |
| Cholesterol (g) | 0.054 | 0.042 |
| Linoleic acid (g) | 4.7 | 4.7 |
| $\alpha$-Linolenic acid (mg) | 600 | 600 |
| Lactose (g) | 75 | 75 |
| Prebiotic (100% GOS) (g) | 4.0 | 4.0 |
| Minerals (g) | 2.3 | 2.3 |
| Na (mg) | 158 | 158 |
| K (mg) | 504 | 504 |
| Cl (mg) | 410 | 410 |
| Ca (mg) | 378 | 378 |
| P (mg) | 208 | 208 |
| Mg (mg) | 44 | 44 |
| Mn ($\mu$g) | 32 | 32 |
| Se ($\mu$g) | 19 | 19 |
| Vitamin A ($\mu$g RE) | 570 | 570 |
| Vitamin D ($\mu$g) | 9.5 | 9.5 |
| Vitamin E (mg TE) | 5.0 | 5.0 |
| Vitamin K1 ($\mu$g) | 50 | 50 |
| Vitamin C (mg) | 95 | 95 |
| Vitamin B1 (mg) | 0.6 | 0.6 |
| Vitamin B2 (mg) | 0.6 | 0.6 |
| Niacin (mg) | 3.2 | 3.2 |
| Vitamin B6 (mg) | 0.4 | 0.4 |
| Lactoferrin (bovine) g | 0.3 | 0.3 |
| Folic acid ($\mu$g) | 95 | 95 |
| Pantothenic acid (mg) | 5.0 | 5.0 |
| Vitamin B12 ($\mu$g) | 1.3 | 1.3 |
| Biotin ($\mu$g) | 12.6 | 12.6 |
| Choline (mg) | 95 | 95 |
| Fe (mg) | 6.3 | 6.3 |
| I ($\mu$g) | 95 | 95 |
| Cu (mg) | 0.4 | 0.4 |

(continued)

| Ingredients | 4 months of age and older | |
|---|---|---|
| | M | F |
| | Per Liter | |
| Zn (mg) | 5.7 | 5.7 |

Example 3

An example of a nutritional system in accordance with the invention is given in table IV.

Table IV

| | Up to 4 months of age | 4 months of age and older | |
|---|---|---|---|
| | Gender neutral | M | F |
| Ingredients | Per Litre | Per Liter | |
| Energy (kcal) | 670 | 630 | 630 |
| Protein (g) | 12.1 | 11.3 | 11.3 |
| Fat (g) | 35.649 | 31.446 | 31.458 |
| Cholesterol (g) | 0.051 | 0.054 | 0.042 |
| Linoleic acid (g) | 5.3 | 4.7 | 4.7 |
| $\alpha$-Linolenic acid (mg) | 675 | 600 | 600 |
| Lactose (g) | 74.7 | 75 | 75 |
| Prebiotic (100% GOS) (g) | 4.3 | 4.0 | 4.0 |
| Minerals (g) | 2.5 | 2.3 | 2.3 |
| Na (mg) | 150 | 158 | 158 |
| K (mg) | 590 | 504 | 504 |
| Cl (mg) | 430 | 410 | 410 |
| Ca (mg) | 410 | 378 | 378 |
| P (mg) | 210 | 208 | 208 |
| Mg (mg) | 50 | 44 | 44 |
| Mn ($\mu$g) | 50 | 32 | 32 |
| Se ($\mu$g) | 13 | 19 | 19 |
| Vitamin A ($\mu$g RE) | 700 | 570 | 570 |
| Vitamin D ($\mu$g) | 10 | 9.5 | 9.5 |
| Vitamin E (mg TE) | 5.4 | 5.0 | 5.0 |
| Vitamin K1 ($\mu$g) | 54 | 50 | 50 |
| Vitamin C (mg) | 67 | 95 | 95 |
| Vitamin B1 (mg) | 0.47 | 0.6 | 0.6 |
| Vitamin B2 (mg) | 1 | 0.6 | 0.6 |
| Niacin (mg) | 6.7 | 3.2 | 3.2 |
| Vitamin B6 (mg) | 0.5 | 0.4 | 0.4 |
| Lactoferrin (bovine) g | 1 | 0.3 | 0.3 |

(continued)

| | Up to 4 months of age | 4 months of age and older | |
|---|---|---|---|
| | Gender neutral | M | F |
| Ingredients | Per Litre | Per Liter | |
| Folic acid ($\mu$g) | 60 | 95 | 95 |
| Pantothenic acid (mg) | 3 | 5.0 | 5.0 |
| Vitamin B12 ($\mu$g) | 2 | 1.3 | 1.3 |
| Biotin ($\mu$g) | 15 | 12.6 | 12.6 |
| Choline (mg) | 67 | 95 | 95 |
| Fe (mg) | 8 | 6.3 | 6.3 |
| I ($\mu$g) | 100 | 95 | 95 |
| Cu (mg) | 0.4 | 0.4 | 0.4 |
| Zn (mg) | 5 | 5.7 | 5.7 |

**Claims**

1. A nutritional system wherein a nutritional system is a collection of more than one synthetic nutritional composition, comprising one gender specific synthetic nutritional composition for a male infant comprising cholesterol in a concentration within the range of 33 to 101 $\mu$g/ml and, one gender specific nutritional composition for a female infant comprising cholesterol in a concentration within the range of 24 to 75 $\mu$g/ml wherein, said male and female gender specific synthetic nutritional compositions are for infants of the same age, wherein the concentration of cholesterol in said gender specific synthetic nutritional composition for a male infant is higher than in said gender specific synthetic nutritional composition for a female infant and wherein said gender specific synthetic nutritional compositions are for infants of 4 months of age or older and the male gender specific synthetic nutritional composition comprises 11 to 77 $\mu$g/ml more cholesterol than the female gender specific synthetic nutritional composition.

2. A nutritional system according to claim 1 wherein the gender specific synthetic nutritional composition is selected from the group consisting of: infant formula, and a composition for infants that is intended to be added to or diluted with human milk.

**Patentansprüche**

1. Nährstoffsystem, wobei ein Nährstoffsystem eine Sammlung von mehr als einer synthetischen Nährstoffzusammensetzung ist, umfassend eine geschlechtsspezifsche, synthetische Nährstoffzusammensetzung für ein männliches Kleinkind, die Cholesterin in einer Konzentration im Bereich von 33 bis 101 $\mu$g/ml enthält, und eine geschlechtsspezifische Nährstoffzusammensetzung für ein weibliches Kleinkind, die Cholesterin in einer Konzentration im Bereich von 24 bis 75 $\mu$g/ml enthält, wobei die männlichen und weiblichen geschlechtsspezifischen, synthetischen Nährstoffzusammensetzungen für Kleinkinder des gleichen Alters vorgesehen sind, wobei die Konzentration von Cholesterin in der geschlechtsspezifischen, synthetischen Nährstoffzusammensetzung für ein männliches Kleinkind höher ist als in der geschlechtsspezifischen, synthetischen Nährstoffzusammensetzung für ein weibliches Kleinkind und wobei die geschlechtsspezifischen, synthetischen Nährstoffzusammensetzungen für Kleinkinder im Alter von 4 Monaten oder älter vorgesehen sind und die männliche geschlechtsspezifische, synthetische Nährstoffzusammensetzung 11 bis 77 $\mu$g/ml mehr Cholesterin als die weibliche geschlechtsspezifische, synthetische Nährstoffzusammensetzung umfasst.

2. Nährstoffsystem nach Anspruch 1, wobei die geschlechtsspezifische, synthetische Nährstoffzusammensetzung aus der Gruppe ausgewählt ist bestehend aus: Säuglingsformel und einer Zusammensetzung für Kleinkinder, die dazu bestimmt ist, humaner Muttermilch zugesetzt oder mit humaner Muttermilch verdünnt zu werden.

**Revendications**

1. Système nutritionnel dans lequel un système nutritionnel est une collection de plus d'une composition nutritionnelle synthétique, comprenant une composition nutritionnelle synthétique spécifique au sexe pour un nourrisson garçon comprenant du cholestérol en une concentration dans la plage de 33 à 101 μg/mL et, une composition nutritionnelle spécifique au sexe pour un nourrisson fille comprenant du cholestérol en une concentration dans la plage de 24 à 75 μg/mL dans lequel, lesdites compositions nutritionnelles synthétiques spécifiques aux sexes masculin et féminin sont destinées à des nourrissons du même âge, dans lequel la concentration de cholestérol dans ladite composition nutritionnelle synthétique spécifique au sexe pour un nourrisson garçon est plus élevée que dans ladite composition nutritionnelle synthétique spécifique au sexe pour un nourrisson fille et dans lequel lesdites compositions nutritionnelles synthétiques spécifiques au sexe sont destinées à des nourrissons âgés de 4 mois ou plus et la composition nutritionnelle synthétique spécifique au sexe masculin comprend 11 à 77 μg/mL de cholestérol en plus que la composition nutritionnelle synthétique spécifique au sexe féminin.

2. Système nutritionnel selon la revendication 1 dans lequel la composition nutritionnelle synthétique spécifique au sexe est choisie dans le groupe constitué de : préparation pour nourrissons, et une composition pour nourrissons qui est prévue pour être ajoutée à ou diluée avec du lait humain.

Model estimates of cholesterol concentration

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013153071 A2
- WO 2012069416 A

- WO 2006077259 A
- WO 2003059778 A

**Non-patent literature cited in the description**

- **WRODNIGG, T. M. ; STUTZ, A.E.** *Angew. Chem. Int. Ed.,* 1999, vol. 38, 827-828